# EUROPÄISCHE PATENTSCHRIFT

(11) **EP 3 164 784 B1**
(45) Veröffentlichungstag und Bekanntmachung des Hinweises auf die Patenterteilung: **20.02.2019**
(21) Anmeldenummer: 15730714.1
(22) Anmeldetag: 09.06.2015
(51) Int. Cl.: G06F 3/01

(54) **VORRICHTUNG UND VERFAHREN ZUM AKTUIEREN EINER HANDUNTERLAGE FÜR EIN EINGABEGERÄT, HANDUNTERLAGE FÜR EIN EINGABEGERÄT, EINGABESYSTEM FÜR EIN TECHNISCHES GERÄT UND HERSTELLUNGSVERFAHREN ZUM HERSTELLEN EINER HANDUNTERLAGE FÜR EIN EINGABEGERÄT**
DEVICE AND METHOD FOR ACTUATING A HAND PAD FOR AN INPUT DEVICE, HAND PAD FOR AN INPUT DEVICE, INPUT SYSTEM FOR A TECHNICAL DEVICE AND MANUFACTURING METHOD FOR MANUFACTURING A HAND PAD FOR AN INPUT DEVICE
DISPOSITIF ET PROCEDE POUR ACTIONNER UN PAD DE MAIN POUR UN DISPOSITIF D'ENTRÉE, PAD DE MAIN POUR UN DISPOSITIF D'ENTRÉE, SYSTÈME DE SAISIE ET MÉTHODE DE FABRICATION POUR FABRIQUER UN PAD DE MAIN POUR UN DISPOSITIF D'ENTRÉE

(30) Priorität: 03.07.2014 DE 102014212916
(43) Veröffentlichungstag der Anmeldung: 10.05.2017
(73) Patentinhaber: Cherry GmbH, 91275 Auerbach/Opf (DE)
(72) Erfinder: AKCADAG, Tolga, 95448 Bayreuth (DE)
(74) Vertreter: Aurigium Leischner & Luthe
(86) Internationale Anmeldenummer: PCT/EP2015/062796
(87) Internationale Veröffentlichungsnummer: WO 2016/000918

(56) Entgegenhaltungen:
- US-A1- 2011 234 494
- US-A1- 2011 309 212

## Beschreibung

Die vorliegende Erfindung bezieht sich auf eine Vorrichtung sowie ein Verfahren zum Aktuieren einer Handunterlage für ein Eingabegerät, auf eine Handunterlage für ein Eingabegerät, auf ein Eingabesystem für ein technisches Gerät und auf ein Herstellungsverfahren zum Herstellen einer Handunterlage für ein Eingabegerät.

Für spezifische Anwendungen verfügen Eingabegeräte technischer Geräte wie z. B. Computer über die Möglichkeit des sogenannten Force Feedbacks an einen Nutzer des technischen Geräts. Über das Force Feedback können im Sinne einer Kraftrückkopplung relevante Informationen über das Eingabegerät in haptisch wahrnehmbarer Weise an den Nutzer übermittelt werden. Ein beliebtes Einsatzgebiet für das Force Feedback sind beispielsweise Computerspiele. Dort kann dem Spieler eine mechanische Rückmeldung zu Ereignissen im Spiel gegeben werden, indem das Eingabegerät beispielsweise bei Zusammenstößen von Fahrzeug oder beim Abfeuern von Waffen vibriert. Auch eine situationsabhängige Erhöhung eines Bewegungswiderstands des Eingabegeräts in bestimmte Richtungen ist möglich. Oft stehen vorbestimmte Vibrations- bzw. Bewegungsmuster für verschiedene Spielsituationen zur Verfügung, um einen möglichst realistischen Eindruck einer aktuellen Spielsituation zu erzeugen. Beispielsweise kann ein in einem Rennspiel mit einer Wand kollidierendes Fahrzeug einen kurzen, plötzlichen Ruck im Eingabegerät erzeugen. In einer lang gezogenen Kurvenfahrt eines Fahrzeugs im Spiel kann eine konstante Zentrierkraft auf das Eingabegerät einwirken. Ferner kann das Eingabegerät während des Abfeuerns einer vollautomatischen Schusswaffe in einem First-Person-Shooter mit anhaltenden Vibrationen unterlegt werden.

In diesem Zusammenhang offenbart die US 2011 0309212 A1 eine orthopädische Handgelenkstütze. An die Handgelenkstütze können Zusatzgeräte und Verlängerungen lösbar angeschlossen werden, um Wärme, Vibration oder Strukturelles wie einen Leuchtkörper, Ventilator oder lonisator bereitzustellen.

Die US 2011/234494 A1 offenbart Techniken bezüglich einer Auflageoberfläche zum Beaufschlagen eines darauf aufliegenden Mensch-Maschine-Schnittstellengerätes mit einer taktilen Rückkopplung.

Vor diesem Hintergrund schafft die vorliegende Erfindung eine verbesserte Vorrichtung zum Aktuieren einer Handunterlage für ein Eingabegerät, ein verbessertes Verfahren zum Aktuieren einer Handunterlage für ein Eingabegerät, eine verbesserte Handunterlage für ein Eingabegerät, ein verbessertes Eingabesystem für ein technisches Gerät sowie ein verbessertes Herstellungsverfahren zum Herstellen einer Handunterlage für ein Eingabegerät gemäß den Hauptansprüchen. Vorteilhafte Ausgestaltungen ergeben sich aus den Unteransprüchen und der nachfolgenden Beschreibung. Beschriebene Ausführungsarten, die nicht in den Schutzumfang der beiliegenden Ansprüche fallen, sind nicht Teil der beanspruchten Erfindung.

Eine Handunterlage für ein Eingabegerät eines technischen Geräts weist eine Vorrichtung auf, die über eine Eingangsschnittstelle zum Empfangen eines Audiosignals und eine Signalverarbeitungseinrichtung verfügt, wobei die Signalverarbeitungseinrichtung ausgebildet ist, um basierend auf dem Audiosignal ein Aktuierungssignal zum Aktuieren der Handunterlage zu ermitteln. Mittels der Eingangsschnittstelle und der Signalverarbeitungseinrichtung kann eine aktuierbare Handunterlage als eigenständige Anwendung zur Verfügung gestellt werden.

Eine Vorrichtung zum Aktuieren einer Handunterlage für ein Eingabegerät, insbesondere eine Tastatur, eines technischen Geräts weist die folgenden Merkmale auf:
eine Eingangsschnittstelle zum Empfangen eines Audiosignals; und
eine mit der Eingangsschnittstelle gekoppelte Signalverarbeitungseinrichtung, die ausgebildet ist, um unter Verwendung von über das Audiosignal übertragenen Audiodaten ein Aktuierungssignal bereitzustellen, wobei das Aktuierungssignal ausgebildet ist, um ein das Audiosignal charakterisierendes Aktuieren der Handunterlage zu bewirken.

Bei dem technischen Gerät kann es sich beispielsweise um einen Computer handeln. Bei der Handunterlage kann es sich um ein längliches flaches Element handeln, das an das Eingabegerät so angrenzend angeordnet werden kann, dass ein Nutzer des technischen Geräts beim Handhaben des Eingabegeräts seine Hand oder Hände, insbesondere die Handballen der Hände, auf der Handunterlage ablegen oder abstützen kann, um einer Überlastung der Hände oder Handgelenke beim Arbeiten an dem technischen Gerät vorzubeugen. Handelt es sich bei dem Eingabegerät um eine Computertastatur, kann der Nutzer beispielsweise beim Tippen auf der Tastatur die Handballen oder Handgelenke auf der Handunterlage auflegen und braucht sie nicht aktiv zu halten. In diesem Sinne kann die Handunterlage auch als eine Handballenauflage oder Handgelenkstütze bezeichnet werden. Das Audiosignal kann beispielsweise eine Aktion des Nutzers an dem Eingabegerät, z. B. einen Tastendruck, oder einen Inhalt eines Programms, an dem der Nutzer aktuell arbeitet, charakterisieren. Unter dem das Audiosignal charakterisierenden Aktuieren kann verstanden werden, dass die Handunterlage durch in oder an der Handunterlage angeordnete Elemente in eine Bewegung versetzt wird, die ein Nutzer des technischen Geräts über die auf der Handunterlage aufliegenden Hände haptisch wahrnehmen kann.

Eine Vorrichtung kann ein elektrisches Gerät sein, das elektrische Signale, beispielsweise Sensorsignale verarbeitet und in Abhängigkeit davon Steuersignale ausgibt. Die Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Gemäß einer Ausführungsform der Vorrichtung kann die Eingangsschnittstelle einen Steckverbinder, insbesondere einer USB-Schnittstelle, aufweisen. Damit ist die Vorrichtung universell einsetzbar und die Signaldaten des Audiosignals können besonders schnell in die Vorrichtung eingelesen werden.

Gemäß einer weiteren Ausführungsform kann die Signalverarbeitungseinrichtung eine Speichereinrichtung zum Speichern von Referenzaudiodaten aufweisen und ausgebildet sein, um unter Verwendung der Referenzaudiodaten das Aktuierungssignal bereitzustellen. Bei der Speichereinrichtung kann es sich beispielsweise um einen EEPROM handeln. In der Speichereinrichtung kann eine Mehrzahl unterschiedlicher Referenzaudiodaten hinterlegt sein, wobei vordefinierten Referenzaudiodaten vordefinierte Aktuierungssignale zugeordnet sein können. Eine Auswahl eines bereitzustellenden Aktuierungssignals kann in der Signalverarbeitungseinrichtung mittels eines Vergleichs der empfangenen Audiodaten mit den Referenzaudiodaten erfolgen. Dabei können diejenigen Referenzaudiodaten als die das Aktuierungssignal bestimmenden Audiodaten ausgewählt werden, die den über das Audiosignal erhaltenen Audiodaten am ehesten entsprechen oder diesen am nächsten kommen. Der Vergleich und die Auswahl der geeigneten Referenzaudiodaten kann über einen Mikrokontroller erfolgen, über den die Signalverarbeitungseinrichtung ebenfalls verfügen kann und der ausgebildet sein kann, um auf die Speichereirichtung zuzugreifen.

Ferner kann die Vorrichtung eine mit der Signalverarbeitungseinrichtung gekoppelte oder koppelbare Aktuierungseinrichtung aufweisen. Die Aktuierungseinrichtung kann ausgebildet sein, um ansprechend auf das Aktuierungssignal die Aktuierung in einer für einen das Eingabegerät handhabenden Nutzer des technischen Geräts haptisch wahrnehmbaren Form zu bewirken. Insbesondere die Aktuierung angrenzend an die Hände oder Handballen des Nutzers bewirkt werden, wenn dieser unter Einsatz des Eingabegeräts mit den Händen an dem technischen Gerät arbeitet. Diese Ausführungsform der Vorrichtung weist den Vorteil auf, dass eine von dem Aktuierungssignal repräsentierte Information von dem Nutzer schnell und intuitiv erfasst werden kann, ohne dass er in seiner aktuellen Tätigkeit am Computer beeinträchtigt wird.

Insbesondere kann es sich bei der haptisch wahrnehmbaren Form der Aktuierung um eine Vibration zumindest eines Teilbereichs der Handunterlage handeln. So kann dem Nutzer die in dem Aktuierungssignal enthaltene Information vorteilhafterweise in besonders angenehmer und zugleich eindrücklicher Art und Weise vermittelt werden. Die Konzentration des Nutzers auf seine Arbeit am technischen Gerät wird nicht oder kaum beeinträchtigt.

Gemäß einer weiteren Ausführungsform kann die Aktuierungseinrichtung einen Signalverstärker zum Verstärken des Aktuierungssignals und mindestens einen mit dem Signalverstärker gekoppelten Aktuator aufweisen. Der Aktuator kann ausgebildet sein, um ansprechend auf ein durch den Signalverstärker verstärktes Aktuierungssignal die Aktuierung auszuführen. Beispielsweise kann die Aktuierungseinrichtung zwei Aktuatoren aufweisen, die an unterschiedlichen Positionen in oder an der Handunterlage, z. B. an je einer Position, in deren Nähe sich voraussichtlich eine Hand des Nutzers beim Arbeiten am technischen Gerät befindet, angeordnet sein können. Bei dem Aktuator kann es beispielsweise um einen kleinen Elektromotor handeln. Mit dem Einsatz des Signalverstärkers können elektrische Ströme in der der Aktuierungseinrichtung vorgeschalteten Signalverarbeitungseinrichtung vorteilhaft klein gehalten werden. Damit können sowohl der Energieaufwand als auch der Bauraum möglichst klein gehalten werden.

Eine Handunterlage für ein Eingabegerät, insbesondere eine Tastatur, eines technischen Geräts weist eine Vorrichtung gemäß einer der im Vorangehenden erläuterten Ausführungsformen und ein Gehäuse auf, wobei zumindest die Signalverarbeitungseinrichtung der Vorrichtung innerhalb des Gehäuses angeordnet ist.

Das Gehäuse kann eine längliche Form in einer Breite entsprechend einer Breite des Eingabegeräts aufweisen und geeignet sein, um auf einer Tischunterlage oder vergleichbaren Unterlage zwischen dem Eingabegerät und dem Nutzer angrenzend an das Eingabegerät positioniert zu werden, sodass der Nutzer beim Arbeiten an dem Eingabegerät bequem seine Hände oder Handballen auf dem Gehäuse ablegen kann, ohne dass eine Funktionalität der Vorrichtung dadurch eingeschränkt werden kann. Die den Elektronikbereich der Handunterlage bildende Vorrichtung kann dabei konzentriert oder verteilt in dem Gehäuse angeordnet sein.

Gemäß einer Ausführungsform der Handunterlage kann das Gehäuse zumindest teilweise aus einem elastisch verformbaren Kunststoff gebildet sein. Mit der Verwendung des weichen und nachgiebigen Kunststoffmaterials für das Gehäuse kann zum einen Ermüdungserscheinungen der Hände oder Handgelenke des Nutzers besonders gut vorgebeugt werden. Zum anderen kann die haptische Aktuierung in effizienter und gleichzeitig geräuscharmer Art und Weise erfolgen.

Beispielsweise kann das Gehäuse an einer Außenseite mindestens ein elastisch verformbares Polster aufweisen. Das Polster kann insbesondere mit dem mindestens einen Aktuator gekoppelt sein. Das mindestens eine Polster kann dabei an einem einer Unterlage für die Handauflage zuzuwendenden Unterseite des Gehäuses oder an einer den Händen des Benutzers zuzuwendenden Oberseite des Gehäuses angeordnet sein. Bei einer Anordnung an der Unterseite kann das Polster ein durch die Aktuierung unter Umständen verursachtes Verrutschen der Handunterlage einfach und wirksam verhindern. Eine Anordnung an der Oberseite kann insbesondere bei einer Positionierung des Aktuators direkt an dem Polster den positiven Effekt zur Folge haben, dass die Aktuierung des Aktuators besonders wirkungsvoll an die Außenseite des Gehäuses, wo sich die Hände des Nutzers befinden, weitergeleitet werden kann. Dies gilt insbesondere, wenn das oder die Polster zusammen mit dem Aktuator oder den Aktuatoren dort positioniert ist bzw. sind, wo im Normalfall die Hand oder Hände des Nutzers beim Arbeiten am technischen Gerät auf der Handunterlage aufliegt bzw. aufliegen.

Gemäß einer Ausführungsform der Handunterlage kann der Steckverbinder in eine Wand des Gehäuses integriert sein. Der Steckverbinder kann dann ausgebildet sein, um einen mit dem Steckverbinder zusammensteckbaren weiteren Verbinder zum elektrischen Verbinden der Vorrichtung mit dem Eingabegerät aufzunehmen. Bei dieser Ausführungsform kann der Steckverbinder insbesondere so ausgebildet sein, dass der weitere Verbinder in den Steckverbinder eingesteckt werden kann. Diese Ausführungsform des Steckverbinders weist den Vorteil auf, dass Kontakte des Steckverbinders besonders gut vor Beschädigungen geschützt sind. Zudem weist die Handunterlage in dieser Ausführungsform eine besonders kompakte Bauweise auf.

Gemäß einer alternativen Ausführungsform der Handunterlage weist die Eingangsschnittstelle ein aus dem Gehäuse herausgeführtes Verbindungskabel auf. Entsprechend kann der Steckverbinder an einem freien Ende des Verbindungskabels angeordnet sein. In dieser Ausführungsform liegt die Handunterlage bereits mit einer fest integrierten Verbindungsmöglichkeit zum elektrischen Anbinden der Handunterlage an das Eingabegerät vor. Ein unbeabsichtigtes Verlieren oder Verlegen des Kabels zum elektrischen Verbinden von Gerät und Handunterlage kann ausgeschlossen werden.

Ferner kann die Handunterlage so ausgeführt sein, dass das Gehäuse zumindest einen Schnapphaken zum Befestigen der Handunterlage an dem Eingabegerät aufweist. So kann die Handunterlage schnell und einfach ohne den Einsatz von Werkzeug und mit geringer Handkraft an dem Eingabegerät befestigt und wieder von diesem entfernt werden. Die Handunterlage kann damit unkompliziert und je nach Wunsch und Bedarf des Nutzers auch an unterschiedlichen technischen Geräten eingesetzt werden.

Ein Eingabesystem für ein technisches Gerät umfasst ein Eingabegerät, insbesondere eine Tastatur, und eine Handunterlage gemäß einer der im Vorangehenden aufgeführten Ausführungsformen, wobei das Eingabegerät und die Handunterlage einstückig gebildet sind oder die Handunterlage über mindestens einen Schnapphaken lösbar an dem Eingabegerät befestigbar oder befestigt ist.

In der einstückigen Ausführung können das Eingabegerät und die Handunterlage ein gemeinsames Gehäuse aufweisen, das jedoch aus unterschiedlichen Materialien gebildet sein kann. So kann das Eingabegerät ein starres Gehäuse aufweisen, das fest mit dem elastisch verformbaren Gehäuse der Handunterlage verbunden sein kann.

Ein Verfahren zum Aktuieren einer Handunterlage für ein Eingabegerät, insbesondere eine Tastatur, eines technischen Geräts umfasst die folgenden Schritte:
Empfangen eines Audiosignals über eine Eingangsschnittstelle; und

Bereitstellen eines Aktuierungssignals unter Verwendung von über das Audiosignal übertragenen Audiodaten mittels einer mit der Eingangsschnittstelle gekoppelten Signalverarbeitungseinrichtung, um ein das Audiosignal charakterisierendes Aktuieren der Handunterlage zu bewirken.

Durch Ausführen des Verfahrens kann eine hierin vorgestellte Handunterlage so aktuiert werden, z. B. in Vibration versetzt werden, dass einem Nutzer des technischen Geräts Informationen eines von ihm an dem technischen Gerät ausgeführten Programms in nachdrücklicher und intuitiver Weise vermittelt werden können.

Ein Herstellungsverfahren zum Herstellen einer Handunterlage für ein Eingabegerät, insbesondere eine Tastatur, eines technischen Geräts, umfasst die folgenden Schritte:
Bereitstellen einer Vorrichtung zum Aktuieren der Handunterlage, wobei die Vorrichtung eine Eingangsschnittstelle zum Empfangen eines Audiosignals und eine mit der Eingangsschnittstelle gekoppelte Signalverarbeitungseinrichtung, die ausgebildet ist, um unter Verwendung von über das Audiosignal übertragenen Audiodaten ein Aktuierungssignal bereitzustellen, aufweist, wobei das Aktuierungssignal ausgebildet ist, um ein das Audiosignal charakterisierendes Aktuieren der Handunterlage zu bewirken;

Bereitstellen eines Gehäuses für die Handunterlage; und

Kombinieren der Vorrichtung mit dem Gehäuse, um die Handunterlage herzustellen.

Das Herstellungsverfahren kann in einer voll- oder teilautomatisierten Fertigungsanlage zum Herstellen einer Vielzahl von oben vorgestellten Handunterlagen ausgeführt werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine Prinzipdarstellung eines technischen Geräts mit einem Eingabesystem gemäß einem Ausführungsbeispiel der vorliegenden Erfindung;
- Fig. 2: ein Blockschaltbild einer Vorrichtung zum Aktuieren einer Handunterlage für ein Eingabegerät, gemäß einem Ausführungsbeispiel der vorliegenden Erfindung;
- Fig. 3: eine perspektivische Darstellung einer Handunterlage für ein Eingabegerät, gemäß einem Ausführungsbeispiel der vorliegenden Erfindung;
- Fig. 4: eine perspektivische Darstellung eines Abschnitts einer Handunterlage für ein Eingabegerät, gemäß einem weiteren Ausführungsbeispiel der vorliegenden Erfindung;
- Fig. 5: eine schematische Darstellung einer Handunterlage für ein Eingabegerät mit Kennzeichnung eines Einbauortes einer Vorrichtung zum Aktuieren der Handunterlage, gemäß einem Ausführungsbeispiel der vorliegenden Erfindung;
- Fig. 6: eine perspektivische Darstellung einer in eine Handunterlage für ein Eingabegerät integrierten Vorrichtung zum Aktuieren der Handunterlage, gemäß einem Ausführungsbeispiel der vorliegenden Erfindung;
- Fig. 7: ein Ablaufdiagramm eines Verfahrens zum Aktuieren einer Handunterlage für ein Eingabegerät, gemäß einem Ausführungsbeispiel der vorliegenden Erfindung; und
- Fig. 8: ein Ablaufdiagramm eines Herstellungsverfahren zum Herstellen einer Handunterlage für ein Eingabegerät, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

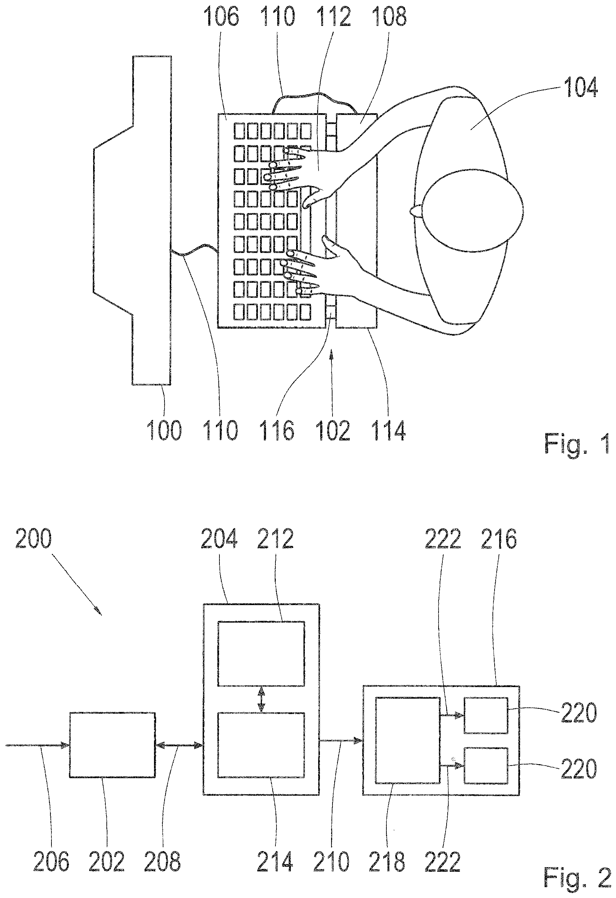

Fig. 1 zeigt eine Prinzipdarstellung eines technischen Geräts 100, das mit einem Eingabesystem 102 gemäß einem Ausführungsbeispiel der vorliegenden Erfindung ausgestattet ist. Bei dem technischen Gerät 100 handelt es sich im in Fig. 1 gezeigten Ausführungsbeispiel um einen Computer, von dem hier stellvertretend der Bildschirm gezeigt ist. An dem Computer 100 arbeitet in der Darstellung in Fig. 1 mittels des Eingabesystems 102 ein Nutzer 104 an oder mit einem in dem Computer 100 hinterlegten Programm. Das Eingabesystem 102 setzt sich aus einem Eingabegerät 106 und einer Handunterlage 108 zusammen. Bei dem Eingabegerät 106 handelt es sich bei dem in Fig. 1 gezeigten Ausführungsbeispiel um eine Tastatur bzw. Computertastatur. Das Eingabegerät 106 kann alternativ auch als eine Maus, ein Joystick, etc. ausgeführt sein. Zur Datenübertragung ist das technische Gerät 100 mit dem Eingabegerät 106 und das Eingabegerät 106 mit der Handunterlage 108 über Verbindungskabel 110 elektrisch leitfähig verbunden. Anstelle von Verbindungskabeln 110 kann auch eine drahtlose Verbindung vorgesehen sein.

Die Handunterlage 108 dient zur Abstützung der Hände 112, insbesondere der Handballen bzw. Handgelenke, des Nutzers 104 beim Arbeiten an dem technischen Gerät 100 über die Tastatur 106. Entsprechend kann die Handunterlage 108 auch als Handballenauflage bezeichnet werden. Die Handunterlage bzw. Handballenauflage 108 weist im in Fig. 1 gezeigten Ausführungsbeispiel eine Rechteckform in einer Länge auf, die es dem Nutzer 104 ermöglicht, beim Arbeiten an dem Eingabegerät 106 die Handgelenke bzw. Handballen beider Hände 112 bequem auf der Handunterlage 108 aufzulegen. Die Handunterlage 108 umfasst ein Gehäuse 114 aus einem elastisch verformbaren Kunststoff und eine zumindest teilweise in das Gehäuse 114 eingebettete Vorrichtung (in Fig. 1 nicht gezeigt) zum Aktuieren der Handunterlage 108. Form und elastisches Gehäuse 114 der Handunterlage 108 ermöglichen es, bei längerem Arbeiten am Computer 100 einer Ermüdung bzw. Schmerzzuständen der Hände 112 bzw. Handgelenke des Nutzers 104 vorzubeugen.

Bei dem in Fig. 1 gezeigten Ausführungsbeispiel ist das Eingabesystem 102 zweistückig gebildet. Die Handunterlage 108 ist zwischen der Tastatur 106 und dem Nutzer 104 auf eine den Computer 100 und das Eingabesystem 102 tragende Unterlage, z. B. eine Tischplatte, angrenzend an die Tastatur 106 positioniert und über zwei Schnapphaken 116 lösbar an der Tastatur 106 befestigt. So ist es dem Nutzer 104 möglich, nach Belieben die Handunterlage 108 durch Betätigen der Schnapphaken 116 von dem Eingabegerät 106 zu lösen und ohne die Handunterlage 108 weiterzuarbeiten oder diese an ein anderes geeignetes Eingabegerät anzuklipsen. Anstelle der Schnapphaken 116 bieten sich alternativ auch andere lösbare Befestigungselemente an. Gemäß alternativen Ausführungsbeispielen kann das Eingabesystem 102 auch einstückig gebildet sein. Es geht dann das Eingabegerät 106 ohne räumliche Trennung in die Handunterlage 108 über, wobei das Eingabegerät 106 und die Handunterlage 108 aus unterschiedlichen Materialien gebildet sein können, sodass das Eingabegerät 106 ein starres Gehäuse und die Handunterlage 108 wie oben beschrieben ein elastisches Gehäuse 114 aufweist.

Fig. 2 zeigt ein Blockschaltbild eines Ausführungsbeispiels einer in die Handunterlage aus Fig. 1 integrierten oder integrierbaren Vorrichtung 200 zum Aktuieren der Handunterlage. Die Vorrichtung 200 kann als ein Elektronikbereich der Handunterlage bezeichnet werden und weist eine Eingangsschnittstelle 202 und eine mit der Eingangsschnittstelle 202 gekoppelte Signalverarbeitungseinrichtung 204 auf. Die Eingangsschnittstelle 202 ist ausgebildet, um über eine mit einem Eingabegerät für ein technisches Gerät bestehende Datenverbindung ein Audiosignal 206 von dem Eingabegerät zu empfangen. Bei dem Eingabegerät kann es sich um die in Fig. 1 gezeigte Tastatur und bei dem technischen Gerät um den in Fig. 1 gezeigten Computer handeln. In dem in Fig. 2 gezeigten Ausführungsbeispiel der Vorrichtung 200 ist die Eingangsschnittstelle als eine USB-Schnittstelle ausgeführt. Die mit der Eingangsschnittstelle 202 gekoppelte Signalverarbeitungseinrichtung 204 ist ausgebildet, um unter Verwendung von über das Audiosignal 206 übertragenen Audiodaten 208 ein Aktuierungssignal 210 zu bestimmen, das ausgebildet ist, um ein das Audiosignal 206 charakterisierendes Aktuieren der Handunterlage zu bewirken.

In dem in Fig. 2 gezeigten Ausführungsbeispiel der Vorrichtung 200 setzt sich die Signalverarbeitungseinrichtung 204 aus einer Speichereinrichtung 212 und einer mit der Speichereinrichtung 212 gekoppelten integrierten Schaltung in Form eines Mikrocontroller 214 zusammen. In der Speichereinrichtung 212 sind gemäß diesem Ausführungsbeispiel Referenzaudiodaten hinterlegt, denen verschiedene Aktuierungssignale 210 zugeordnet sind. Bei dem in Fig. 2 gezeigten Ausführungsbeispiel der Vorrichtung 200 handelt es sich bei der Speichereinrichtung 212 um einen EEPROM. Gemäß Ausführungsbeispielen kann die Speichereinrichtung 212 auch als ein anderes geeignetes nichtflüchtiges elektronisches Speichermedium ausgeführt sein. Der Mikrocontroller 214 ist ausgebildet, um unter Verwendung eines geeigneten Algorithmus die über das Audiosignal 206 in die Vorrichtung 200 eingelesenen Audiodaten 208 mit den Referenzaudiodaten abzugleichen und so das Aktuierungssignal 210 zu bestimmen.

In dem in Fig. 2 gezeigten Ausführungsbeispiel umfasst die Vorrichtung 200 ferner eine Aktuierungseinrichtung 216, die ausgebildet ist, um über eine geeignete Schnittstelle das Aktuierungssignal 210 von der Signalverarbeitungseinrichtung 204 zu empfangen. Die Aktuierungseinrichtung 216 weist in dem in Fig. 2 gezeigten Ausführungsbeispiel der Vorrichtung 200 einen Signalverstärker 218 sowie zwei mit dem Signalverstärker 218 gekoppelte Aktuatoren 220 auf. Der Signalverstärker bzw. High Voltage Amplifier 218 ist ausgebildet, um das über die Signalverarbeitungseinrichtung 204 bereitgestellte Aktuierungssignal 210 geeignet zu verstärken und jedem der Aktuatoren 220 als verstärktes Aktuierungssignal 222 bereitzustellen. Die Aktuatoren 220 können benachbart zueinander oder beabstandet voneinander in der Handunterlage angeordnet sein und ausgebildet sein, um ansprechend auf das verstärkte Aktuierungssignal 222 eine Aktuierung der Handunterlage in einer Form zu bewirken, die für einen das an die Handunterlage angebundene Eingabegerät handhabenden Nutzer des technischen Geräts haptisch wahrnehmbar ist.

In dem in Fig. 2 gezeigten Ausführungsbeispiel der Vorrichtung 200 sind die Aktuatoren 220 als kleine Elektromotoren ausgeführt, die bei einer Ansteuerung mittels des verstärkten Aktuierungssignals 222 anspringen und eine für den Nutzer des technischen Geräts an seinen Händen spürbare Vibration der Handunterlage bewirken. Zusammenfassend wird über die einzelnen Einrichtungen 202, 204, 216 der Vorrichtung 200 eine das eingelesene Audiosignal 206 charakterisierende Aktuierung der Handunterlage erzeugt, die für den Nutzer des angeschlossenen technischen Geräts über seine Hände unmissverständlich haptisch wahrnehmbar ist.

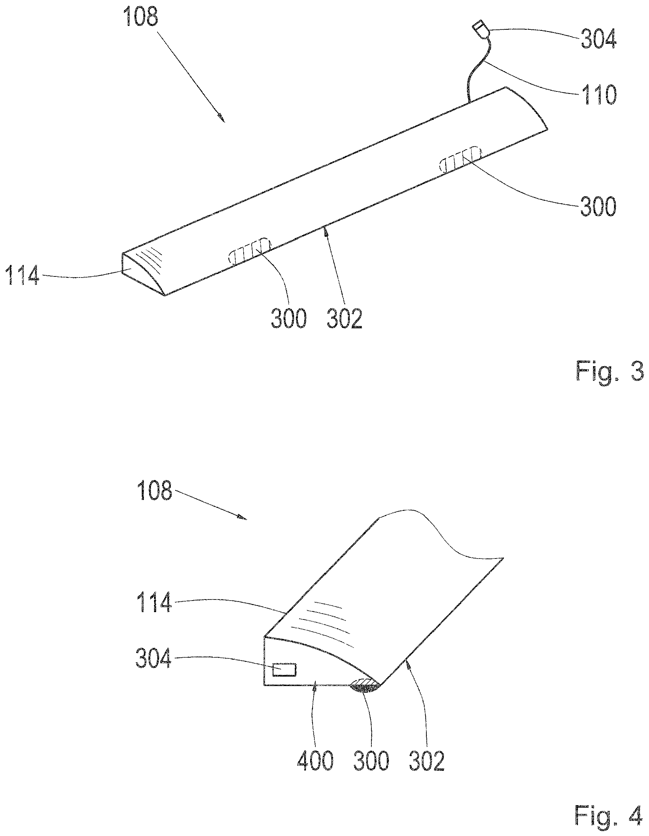

Fig. 3 zeigt anhand einer perspektivischen Darstellung ein Ausführungsbeispiel einer hierin vorgestellten Handunterlage 108 für ein Eingabegerät. Wie bereits erwähnt, ist die Handunterlage 108 als längliches Element ausgeführt. Das in Fig. 3 gezeigte Ausführungsbeispiel der Handunteralge 108 weist zudem einen keilförmigen Querschnitt auf. Die Keilform hat den Vorteil, dass die Handunterlage 108 so besonders ergonomisch für den Nutzer gestaltet ist. Dabei ist es wichtig, die Handunterlage 108 so an dem - hier nicht gezeigten - Eingabegerät zu positionieren, dass eine Spitze des Keils dem Nutzer zugewandt ist und eine der Spitze gegenüberliegende Keilbasis angrenzend an das Eingabegerät positioniert ist. Entsprechend ihrer Entspannungsfunktion für die Handballen oder Handgelenke des Nutzers kann die Handunterlage 108 auch mit dem englischen Begriff "palm rest" bezeichnet werden. In der Darstellung in Fig. 3 ist die Handunterlage 108 mit Blick auf das Gehäuse 114 gezeigt, in das die in Fig. 2 gezeigte Vorrichtung zum Aktuieren der Handunterlage 108 ganz oder teilweise eingebettet ist.

Wie bereits erwähnt, ist das Gehäuse 114 aus einem elastisch verformbaren Material, hier einem Kunststoffmaterial, gebildet. Konkret ist die das Gehäuse 114 im in Fig. 3 gezeigten Ausführungsbeispiel der Handunterlage 108 aus einem Schaumstoff gebildet, der mit einer robusten aber flexiblen Kunststoffschicht, beispielsweise Kunstleder, ummantelt ist. In der Ausführung mit dem Gehäuse aus elastischem Kunststoff eignet sich die Handunterlage 108 besonders zum bequemen Auflegen der Handballen oder Handgelenke eines Nutzers, auch bei längerem Arbeiten am mit der Handballenauflage 108 gekoppelten technischen Gerät.

Schraffierte Bereiche des in Fig. 3 gezeigten Ausführungsbeispiels der Handunterlage 108 kennzeichnen zwei für das Auge in Fig. 3 an sich nicht sichtbare Polster 300, die an einer einer Unterlage für die Handauflage 108 zugewandten Unterseite 302 des Gehäuses 114 angeordnet sind. Wie die Darstellung zeigt, sind die Polster 300 direkt angrenzend an die Keilspitze der keilförmigen Handunterlage 108 an der Unterseite 302 angeordnet. Die Polster 300 sind entfernt voneinander an der Unterseite 302 des Gehäuses 114 angeordnet bzw. in die Unterseite 302 eingelassen. Dabei können die Polster 300 jeweils gleich weit von gegenüberliegenden Schmalseiten des Gehäuses 114 beabstandet angeordnet sein.

Wie die Darstellung in Fig. 3 zeigt, befinden sich die Polster 300 an Positionen des Gehäuses 114, an denen mit hoher Wahrscheinlichkeit die Hände bzw. Handballen bzw. Handgelenke einer an dem angebundenen Eingabegerät arbeitenden Person auf der Handunterlage 108 aufliegen. Dies ist sinnvoll, da in dem in Fig. 3 gezeigten Ausführungsbeispiel die anhand der Fig. 2 vorgestellten Aktuatoren jeweils direkt oberhalb jedes der Polster 300 in dem Gehäuse 114 angeordnet sind. Die Aktuatoren sind dabei innerhalb des Gehäuses 114 planar, also im Wesentlichen parallel zu der Unterseite 302 des Gehäuses 114 verlaufend, angeordnet. Die Polster 300 sind ebenfalls aus einem elastisch verformbaren und zusätzlich gummiartigen Kunststoff gebildet. Gemäß Ausführungsbeispielen können die Polster in Form von rutschfesten Gummifüßchen in die Unterseite 302 des Gehäuses 114 eingelassen sein und entsprechend mit dem englischen Ausdruck "rubber pads" bezeichnet werden.

Die Koppelung der Polster 300 mit den Aktuatoren sowie deren strategische Positionierung bewirkt hier, dass die Aktuierung der Handunterlage 108 durch die Aktuatoren punktuell an einer wahrscheinlichen Position der Hände eines Nutzers besonders ausgeprägt stattfindet. So kann die über die Aktuatoren bewirkte haptisch wahrnehmbare Aktuierung besonders effektiv an die Hände des Nutzers weitergeleitet werden. In dem in Fig. 3 gezeigten Ausführungsbeispiel sind die Aktuatoren ausgebildet, um eine Vibration der Handunterlage bzw. der mit den Aktuatoren gekoppelten Polster 300 zu bewirken. Der Nutzer erhält so über seine Hände ein Force Feedback der mit dem in der Handunterlage verarbeiteten Audiosignal verknüpften Information. Die Verwendung eines Gummimaterials für die Polster 300 sorgt zudem dafür, dass bei einer Aktuierung bzw. Vibration der Handunterlage 108 mittels der Aktuatoren die Handunterlage 108 nicht unbeabsichtigt auf der Unterlage verrutscht. Gemäß Ausführungsbeispielen kann auch nur ein Polster 300 oder mehr als zwei Polster 300 vorgesehen sein.

Als weitere Besonderheit weist das in Fig. 3 gezeigte Ausführungsbeispiel der Handunterlage 108 einen Steckverbinder 304 zum elektrisch leitfähigen Koppeln der Handunterlage 108 mit einem Eingabegerät auf. Der Steckverbinder 304 ist hier über das aus dem Gehäuse 114 herausgeführte Verbindungskabel 110 mit der als USB-Schnittstelle ausgeführten - in Fig. 3 nicht gezeigten - Eingangsschnittstelle der in die Handunterlage 108 integrierten Vorrichtung zum Aktuieren derselben verbunden. Das Verbindungskabel 110 ist an einem Ende fest mit dem Gehäuse 114 verbunden, während der Steckverbinder 304 fest an einem - dem einen Ende gegenüberliegenden - freien Ende 306 des Verbindungskabels 110 angeordnet ist. Bei dem in Fig. 3 gezeigten Steckverbinder 304 handelt es sich um einen USB-Steckverbinder herkömmlicher Größe. Wie die Darstellung in Fig. 3 zeigt, kann die gemäß dem hier vorgestellten Konzept realisierte Handballenauflage 108 mit Vibrationsmodulen als eigenständige Anwendung in Kombination mit beliebigen Eingabegeräten vielfältig eingesetzt werden.

Fig. 4 zeigt anhand einer weiteren perspektivischen Darstellung einen Abschnitt einer weiteren beispielhaften Handunterlage 108 für ein Eingabegerät eines technischen Geräts. Wie die seitliche Ansicht zeigt, ist die Handunterlage 108 wiederum keilförmig ausgeführt. Anders als in Fig. 3 sind hier die Polster 300 - es ist nur eines gezeigt - zwar wiederum an der Unterseite 302 des Gehäuses 114, jedoch ganz außen an der die Keilspitze bildenden Längsseite des Gehäuses 114, angrenzend an die Schmalseiten des Gehäuses 114 angeordnet. Als weiteren Unterschied zu dem in Fig. 3 gezeigten Ausführungsbeispiel weist die in Fig. 4 gezeigte Handunterlage 108 den USB-Steckverbinder 304 als in eine Wand 400 des Gehäuses 114 integriert auf. Beispielsweise kann der USB-Steckverbinder 304 in eine der Schmalseiten des Gehäuses 114 integriert sein. Der Steckverbinder 304 ist ausgebildet, um einen mit dem Steckverbinder 304 zusammensteckbaren weiteren Verbinder zum elektrischen Verbinden der Vorrichtung mit dem Eingabegerät aufzunehmen. In dem in Fig. 4 gezeigten Ausführungsbeispiel ist der Steckverbinder 304 als Ministeckverbinder als Teil einer Mini-USB-Schnittstelle ausgeführt.

Mittels der USB-Schnittstelle 304, in Fig. 3 in Normalgröße und in Fig. 4 in der Miniausführung gezeigt, werden die Audiosignaldaten an den anhand der Fig. 2 erläuterten Mikrocontroller bzw. MCU weitergegeben, um diese mittels einer auf dem Mikrocontroller ausgeführten oder ausführbaren Software auszuwerten. Nach der Auswertung übermittelt der MCU die erforderlichen Daten an den ebenfalls in Fig. 2 gezeigten Hochspannungsverstärker. Dieser verstärkt diese Signale beispielsweise auf 1 kV für die Aktuatoren. Somit pulsiert die Handballenauflage 108 bei entsprechenden Signalen. Auch bei dem in Fig. 4 gezeigten Ausführungsbeispiel ist die Handunterlage 108 als separate Vibrationshandballenauflage für beliebige Eingabegeräte ausgeführt.

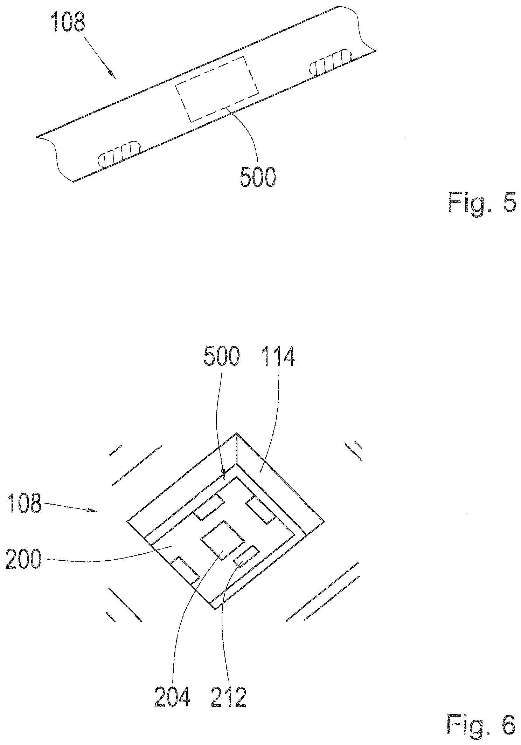

Fig. 5 zeigt anhand einer Draufsicht auf einen Abschnitt der beispielhaften Handunterlage 108 aus Fig. 3 anhand einer Strichlinie einen beispielhaften Einbauort 500 zumindest eines Teils des gemäß Ausführungsbeispielen aus dem EEPROM, dem Mikrocontroller, der Mini-USB-Schnittstelle, dem High-Voltage-Amplifier und den Aktuatoren bestehenden Elektronikbereichs der anhand der Fig. 2 vorgestellten Vorrichtung zum Aktuieren der Handunterlage 108.

Fig. 6 zeigt anhand einer perspektivischen Darstellung eine beispielhafte Integration der Vorrichtung 200 am Einbauort 500 der Handunterlage 108. Wie die Darstellung zeigt, ist der Einbauort 500 als rechteckige Ausnehmung im Gehäuse 114 der Handunterlage 108 angelegt. Die - hier auch eine Rechteckform aufweisende - Vorrichtung 200 bzw. Teile der Vorrichtung sind am Boden der Ausnehmung 500 angeordnet. Gezeigt ist die mittig angeordnete Signalverarbeitungseinrichtung 204, benachbart zu dieser die Speichereinrichtung 212 sowie drei Kontakte an Randbereich der Vorrichtung, beispielsweise zum Anschluss der Aktuatoren. Elemente 204, 212 der Vorrichtung 200 können auf einer Leiterplatte der Vorrichtung 200 angeordnet sein.

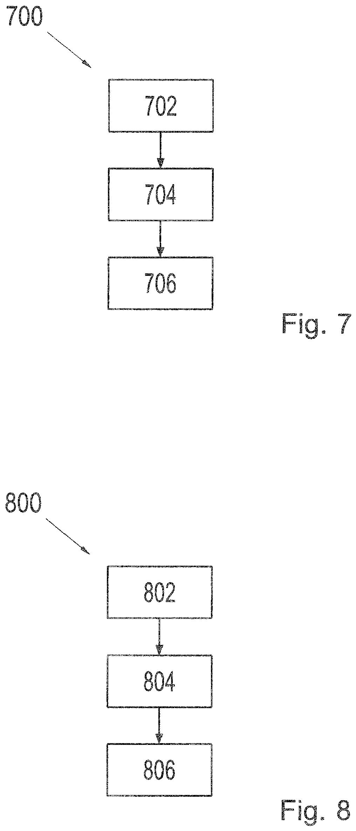

Fig. 7 zeigt ein Ablaufdiagramm eines Ausführungsbeispiels eines Verfahrens 700 zum Aktuieren einer Handunterlage für ein Eingabegerät. Mit Ausführen des Verfahrens 700 kann beispielsweise eine Handunterlage in Form einer Vibrationshandballenauflage, wie sie anhand der Figuren 3 und 4 gezeigt ist, aktuiert werden. In einem Schritt 702 empfängt eine Eingangsschnittstelle, beispielsweise eine USB-Eingangsschnittstelle einer in die Handunterlage integrierten Vorrichtung zum Aktuieren der Handunterlage ein Audiosignal eines mit der Handunterlage elektrisch leitfähig gekoppelten Eingabegeräts für ein technisches Gerät. In einem Schritt 704 wird mittels einer mit der USB-Eingangsschnittstelle gekoppelten Signalverarbeitungseinrichtung unter Verwendung von über das Audiosignal übertragenen Audiodaten ein Aktuierungssignal an Aktuatoren der Handunterlage bereitgestellt. Ansprechend auf das Aktuierungssignal bewirken in einem Schritt 706 die Aktuatoren eine das Audiosignal charakterisierende Vibration der Handunterlage.

Fig. 8 zeigt ein Ablaufdiagramm eines Ausführungsbeispiels eines Herstellungsverfahrens 800 zum Herstellen einer Handunterlage für ein Eingabegerät. In einem Schritt 802 wird eine Vorrichtung zum Aktuieren der Handunterlage, wie sie anhand der Darstellung in Fig. 2 vorgestellt ist, bereitgestellt. In einem Schritt 804 wird ein Gehäuse für die Handunterlage bereitgestellt. In einem Schritt 806 wird die Vorrichtung zumindest teilweise in das Gehäuse integriert, um die Handunterlage als separate aktuierbare Handballenauflage für beliebige Eingabegeräte fertigzustellen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: technisches Gerät
- 102: Eingabesystem
- 104: Nutzer
- 106: Eingabegerät
- 108: Handunterlage
- 110: Verbindungskabel
- 112: Hand
- 114: Gehäuse
- 116: Schnapphaken

- 200: Vorrichtung zum Aktuieren einer Handunterlage
- 202: Eingangsschnittstelle
- 204: Signalverarbeitungseinrichtung
- 206: Audiosignal
- 208: Audiodaten
- 210: Aktuierungssignal
- 212: Speichereinrichtung
- 214: Mikrocontroller
- 216: Aktuierungseinrichtung
- 218: Signalverstärker
- 220: Aktuator
- 222: verstärktes Aktuierungssignal

- 300: Polster
- 302: Unterseite des Gehäuses
- 304: Steckverbinder
- 306: freies Ende des Verbindungskabels

- 400: Wand des Gehäuses

- 500: Einbauort zumindest eines Teils der Vorrichtung
- 700: Verfahren zum Aktuieren einer Handunterlage
- 702: Schritt des Empfangens des Audiosignals
- 704: Schritt des Bereitstellens des Aktuierungssignals
- 706: Schritt des Aktuierens der Handunterlage

- 800: Verfahren zum Herstellen einer Handunterlage
- 802: Schritt des Bereitstellens einer Vorrichtung zum Aktuieren der Handunterlage
- 804: Schritt des Bereitstellens eines Gehäuses für die Handunterlage
- 806: Schritt des Kombinierens der Vorrichtung mit dem Gehäuse

## Patentansprüche

1. Handunterlage (108) für ein Eingabegerät (106), insbesondere eine Tastatur, eines technischen Geräts (100), wobei die Handunterlage (108) eine Vorrichtung (200) zum Aktuieren der Handunterlage (108) und ein Gehäuse (114) aufweist, wobei die Vorrichtung (200) die folgenden Merkmale aufweist:
eine Eingangsschnittstelle (202) zum Empfangen eines Audiosignals (206);
eine mit der Eingangsschnittstelle (202) gekoppelte Signalverarbeitungseinrichtung (204), die ausgebildet ist, um unter Verwendung von über das Audiosignal (206) übertragenen Audiodaten (208) ein Aktuierungssignal (210) bereitzustellen, wobei das Aktuierungssignal (210) ausgebildet ist, um ein das Audiosignal (206) charakterisierendes Aktuieren der Handunterlage (108) zu bewirken; und
eine mit der Signalverarbeitungseinrichtung (204) gekoppelte Aktuierungseinrichtung (216), die ausgebildet ist, um ansprechend auf das Aktuierungssignal (210) die Aktuierung in einer für einen das Eingabegerät (106) handhabenden Nutzer (104) des technischen Geräts (100) haptisch wahrnehmbaren Form zu bewirken;
wobei die Aktuierungseinrichtung (216) einen Signalverstärker (218) zum Verstärken des Aktuierungssignals (210) und mindestens einen mit dem Signalverstärker (218) gekoppelten Aktuator (220) aufweist;
wobei der Aktuator (220) ausgebildet ist, um ansprechend auf ein durch den Signalverstärker (218) verstärktes Aktuierungssignal (222) die Aktuierung auszuführen;
wobei zumindest die Signalverarbeitungseinrichtung (204) innerhalb des Gehäuses (114) angeordnet ist;
wobei das Gehäuse (114) an einer einer Unterlage für die Handauflage (108) zugewandten Unterseite (302) mindestens ein elastisch verformbares Polster (300) aufweist, wobei das Polster (300) mit dem mindestens einen Aktuator (220) gekoppelt ist, und wobei der Aktuator (220) ausgebildet ist, um eine Vibration des mindestens einen mit dem Aktuator (220) gekoppelten Polsters (300) zu bewirken;
wobei das Gehäuse (114) zumindest einen Schnapphaken (116) zum Befestigen der Handunterlage (108) an dem Eingabegerät (106) aufweist.

2. Handunterlage (108) gemäß Anspruch 1, **dadurch gekennzeichnet, dass** die Eingangsschnittstelle (202) einen Steckverbinder (304), insbesondere einer USB-Schnittstelle, aufweist.

3. Handunterlage (108) gemäß einem der vorangegangenen Ansprüche, **dadurch gekennzeichnet, dass** die Signalverarbeitungseinrichtung (204) eine Speichereinrichtung (212) zum Speichern von Referenzaudiodaten aufweist, wobei die Signalverarbeitungseinrichtung (204) ausgebildet ist, um unter Verwendung der Referenzaudiodaten das Aktuierungssignal (210) bereitzustellen.

4. Handunterlage (108) gemäß einem der vorangegangenen Ansprüche, **dadurch gekennzeichnet, dass** die haptisch wahrnehmbare Form der Aktuierung eine Vibration zumindest eines Teilbereichs der Handunterlage (108) ist.

5. Handunterlage (108) gemäß einem der vorangegangenen Ansprüche, **dadurch gekennzeichnet, dass** das Gehäuse (114) zumindest teilweise aus einem elastisch verformbaren Kunststoff gebildet ist.

6. Handunterlage (108) gemäß einem der Ansprüche 2-5, **dadurch gekennzeichnet, dass** der Steckverbinder (304) in eine Wand (400) des Gehäuses (114) integriert ist, wobei der Steckverbinder (304) ausgebildet ist, um einen mit dem Steckverbinder (304) zusammensteckbaren weiteren Verbinder zum elektrischen Verbinden der Vorrichtung (200) mit dem Eingabegerät (106) aufzunehmen.

7. Handunterlage (108) gemäß einem der Ansprüche 2-6, **dadurch gekennzeichnet, dass** die Eingangsschnittstelle (202) ein aus dem Gehäuse (114) herausgeführtes Verbindungskabel (110) aufweist, wobei der Steckverbinder (304) an einem freien Ende des Verbindungskabels (110) angeordnet ist.

8. Eingabesystem (102) für ein technisches Gerät (100), wobei das Eingabesystem (102) ein Eingabegerät (106), insbesondere eine Tastatur, und eine Handunterlage (108) gemäß einem der vorangegangenen Ansprüche aufweist.

9. Verfahren (700) zum Aktuieren einer Handunterlage (108) für ein Eingabegerät (106), insbesondere eine Tastatur, eines technischen Geräts (100), wobei die Handunterlage (108) eine Vorrichtung (200) zum Aktuieren der Handunterlage (108) und ein Gehäuse (114) aufweist, wobei das Verfahren (700) die folgenden Schritte aufweist:
Empfangen (702) eines Audiosignals (206) über eine Eingangsschnittstelle (202);
Bereitstellen (704) eines Aktuierungssignals (210) unter Verwendung von über das Audiosignal (206) übertragenen Audiodaten (208) mittels einer mit der Eingangsschnittstelle (202) gekoppelten Signalverarbeitungseinrichtung (204), um ein das Audiosignal (206) charakterisierendes Aktuieren der Handunterlage (108) zu bewirken, wobei zumindest die Signalverarbeitungseinrichtung (204) innerhalb des Gehäuses (114) angeordnet ist; und
Bewirken (706) der Aktuierung in einer für einen das Eingabegerät (106) handhabenden Nutzer (104) des technischen Geräts (100) haptisch wahrnehmbaren Form ansprechend auf das Aktuierungssignal (210) unter Verwendung einer mit der Signalverarbeitungseinrichtung (204) gekoppelten Aktuierungseinrichtung (216), wobei die Aktuierungseinrichtung (216) einen Signalverstärker (218) zum Verstärken des Aktuierungssignals (210) und mindestens einen mit dem Signalverstärker (218) gekoppelten Aktuator (220) aufweist, wobei der Aktuator (220) ausgebildet ist, um ansprechend auf ein durch den Signalverstärker (218) verstärktes Aktuierungssignal (222) die Aktuierung auszuführen, wobei das Gehäuse (114) an einer einer Unterlage für die Handauflage (108) zugewandten Unterseite (302) mindestens ein elastisch verformbares Polster (300) aufweist, wobei das Polster (300) mit dem mindestens einen Aktuator (220) gekoppelt ist, wobei der Aktuator (220) ausgebildet ist, um eine Vibration des mindestens einen mit dem Aktuator (220) gekoppelten Polsters (300) zu bewirken, wobei das Gehäuse (114) zumindest einen Schnapphaken (116) zum Befestigen der Handunterlage (108) an dem Eingabegerät (106) aufweist.

## Claims

1. Hand support (108) for an input device (106), in particular a keyboard, of a technical device (100), wherein the hand support (108) comprises an apparatus (200) for actuating the hand support (108) and a housing (114), wherein the apparatus (200) comprises:
an input interface (202) for receiving an audio signal (206);
a signal processing device (204) which is coupled to the input interface (202) and is configured to provide an actuation signal (210) using audio data (208) transmitted via the audio signal (206), wherein the actuation signal (210) is configured to actuate the hand support (108) in a manner characterising the audio signal (206); and
an actuating device (216) coupled to the signal processing device (204) and configured to effect the actuation responsive to the actuation signal (210) in a manner haptically perceptible for a user (104) of the technical device (100) who manipulates the input device (106);
wherein the actuating device (216) comprises a signal amplifier (218) for amplifying the actuation signal (210) and at least one actuator (220) coupled to the signal amplifier (218);
wherein the actuator (220) is configured to perform the actuation responsive to an actuation signal (222) amplified by the signal amplifier (218);
wherein at least the signal processing device (204) is arranged inside the housing (114);
wherein the housing (114) comprises at least one elastically deformable pad (300) on an underside (302) facing an underlay for the hand support (108), wherein the pad (300) is coupled to the at least one actuator (220), and
wherein the actuator (220) is configured to cause vibration of the at least one pad (300) coupled to the actuator (220);
wherein the housing (114) comprises at least one snap-fit (116) for attaching the hand support (108) to the input device (106).

2. Hand support (108) according to claim 1, **characterised in that** the input interface (202) comprises a connector (304), in particular of a USB interface.

3. Hand support (108) according to one of the preceding claims, **characterised in that** the signal processing device (204) comprises a storage device (212) for storing reference audio data, wherein the signal processing device (204) is configured to provide the actuation signal (210) using the reference audio data.

4. Hand support (108) according to one of the preceding claims, **characterised in that** the haptically perceptible manner of the actuation is a vibration of at least a portion of the hand support (108).

5. Hand support (108) according to one of the preceding claims, **characterised in that** the housing (114) is formed at least partially of elastically deformable plastics.

6. Hand support (108) according to one of claims 2-5, **characterised in that** the connector (304) is integrated into a wall (400) of the housing (114), wherein the connector (304) is configured to accommodate a further connector plug-gable together with the connector (304) for electrically connecting the apparatus (200) to the input device (106).

7. Hand support (108) according to one of claims 2-6, **characterised in that** the input interface (202) comprises a connecting cable (110) guided out of the housing (114), wherein the connector (304) is arranged at a free end of the connecting cable (110).

8. Input system (102) for a technical device (100), wherein the input system (102) comprises an input device (106), in particular a keyboard, and a hand support (108) according to one of the preceding claims.

9. Method (700) for actuating a hand support (108) for an input device (106), in particular a keyboard, of a technical device (100), wherein the hand support (108) comprises an apparatus (200) for actuating the hand support (108) and a housing (114), wherein the method (700) comprises the steps of:
receiving (702) an audio signal (206) via an input interface (202);
providing (704) and actuation signal (210) using audio data (208) transmitted via the audio signal (206) by means of a signal processing device (204) coupled to the input interface (202), to actuate the hand support (108) in a manner characterising the audio signal (206), wherein at least the signal processing device (204) is arranged inside the housing (114); and
effecting (706) the actuation responsive to the actuation signal (210) in a manner haptically perceptible for a user (104) of the technical device (100) who manipulates the input device (106), using an actuating device (216) coupled to the signal processing device (204), wherein the actuating device (216) comprises a signal amplifier (218) for amplifying the actuation signal (210) and at least one actuator (220) coupled to the signal amplifier (218), wherein the actuator (220) is configured to perform the actuation responsive to an actuation signal (222) amplified by the signal amplifier (218), wherein the housing (114) comprises at least one elastically deformable pad (300) on an underside (302) facing an underlay for the hand support (108), wherein the pad (300) is coupled to the at least one actuator (220), wherein the actuator (220) is configured to cause vibration of the at least one pad (300) coupled to the actuator (220), wherein the housing (114) comprises at least one snap-fit (116) for attaching the hand support (108) to the input device (106).

## Revendications

1. Repose-poignet (108) pour un dispositif de saisie (106), en particulier un clavier, d'un appareil technique (100), dans lequel le repose-poignet (108) comporte un dispositif (200) pour actionner le repose-poignet (108) et un boîtier (114), dans lequel le dispositif (200) présente les éléments caractéristiques suivants :
une interface d'entrée (202) pour recevoir un signal audio (206) ;
un dispositif de traitement de signal (204) couplé à l'interface d'entrée (202) et conçu pour délivrer un signal d'actionnement (210) en utilisant des données audio (208) transmises à l'aide du signal audio (206), dans lequel le signal d'actionnement (210) est conçu pour provoquer un actionnement du repose-poignet (108) qui caractérise le signal audio (206) ; et
un dispositif d'actionnement (216) couplé audit dispositif de traitement de signal (204), qui est conçu pour provoquer ledit actionnement de l'appareil technique (100), en réponse audit signal de commande (210), sous une forme perceptible haptiquement par un utilisateur (104) qui manipule l'appareil d'entrée (106) ;
dans lequel le dispositif d'actionnement (216) comporte un amplificateur de signal (218) pour amplifier le signal d'actionnement (210) et au moins un actionneur (220) couplé à l'amplificateur de signal (218) ;
dans lequel l'actionneur (220) est conçu pour effectuer l'actionnement en réponse à un signal d'actionnement (222) amplifié par l'amplificateur de signal (218) ;
dans lequel au moins le dispositif de traitement de signal (204) est disposé à l'intérieur du boîtier (114) ;
dans lequel le boîtier (114) comporte au moins un coussinet (300) déformable élastiquement sur une face inférieure (302) tournée vers un support pour le repose-poignet (108), dans lequel le coussinet (300) est couplé à l'au moins un actionneur (220), et dans lequel l'actionneur (220) est conçu pour provoquer une vibration de l'au moins un coussinet (300) couplé à l'actionneur (220) ;
dans lequel le boîtier (114) comporte au moins un crochet d'encliquetage (116) pour fixer le repose-poignet (108) à l'appareil de saisie (106).

2. Repose-poignet (108) selon la revendication 1, **caractérisé en ce que** l'interface d'entrée (202) comporte un connecteur (304), en particulier une interface USB.

3. Repose-poignet (108) selon l'une quelconque des revendications précédentes, **caractérisé en ce que** le dispositif de traitement de signal (204) comprend un dispositif de mémoire (212) pour stocker des données audio de référence, dans lequel le dispositif de traitement de signal (204) est conçu pour délivrer le signal d'actionnement (210) en utilisant les données audio de référence.

4. Repose-poignet (108) selon l'une quelconque des revendications précédentes, **caractérisé en ce que** la forme d'actionnement perceptible haptiquement est une vibration d'au moins une région partielle du repose-poignet (108).

5. Repose-poignet (108) selon l'une quelconque des revendications précédentes, **caractérisé en ce que** le boîtier (114) est formé au moins partiellement d'une matière plastique élastiquement déformable.

6. Repose-poignet (108) selon l'une quelconque des revendications 2-5, **caractérisé en ce que** le connecteur (304) est intégré à une paroi (400) du boîtier (114), dans lequel le connecteur (304) est conçu pour recevoir un autre connecteur pouvant être accouplé avec le connecteur (304) pour connecter électriquement le dispositif (200) à l'appareil de saisie (106).

7. Repose-poignet (108) selon l'une quelconque des revendications 2-6, **caractérisé en ce que** l'interface d'entrée (202) comprend un câble de connexion (110) sortant du boîtier (114), dans lequel le connecteur (304) est disposé à une extrémité libre du câble de connexion (110).

8. Système de saisie (102) pour un appareil technique (100), dans lequel le système de saisie (102) comporte un appareil de saisie (106), en particulier un clavier, et un repose-poignet (108) selon l'une quelconque des revendications précédentes.

9. Procédé (700) pour actionner un repose-poignet (108) pour un dispositif de saisie (106), en particulier un clavier, d'un appareil technique (100), dans lequel le repose-poignet (108) comprend un dispositif (200) pour actionner le repose-poignet (108) et un boîtier (114), dans lequel le procédé (700) comprend les étapes consistant à :
recevoir (702) un signal audio (206) par l'intermédiaire d'une interface d'entrée (202) ;
délivrer (704) un signal d'actionnement (210) en utilisant des données audio (208) transmises par l'intermédiaire du signal audio (206) au moyen d'un dispositif de traitement de signal (204) couplé à l'interface d'entrée (202) pour provoquer un actionnement du repose-poignet (108), qui caractérise le signal audio (206), dans lequel au moins le dispositif de traitement de signal (204) est disposé à l'intérieur du boîtier (114) ; et
provoquer (706) ledit actionnement de l'appareil technique (100), en réponse audit signal de commande (210), sous une forme perceptible haptiquement par un utilisateur (104) qui manipule l'appareil de saisie (106), en utilisant un dispositif de commande (216) couplé au dispositif de traitement de signal (204), dans lequel l'actionneur (216) comporte un amplificateur de signal (218) pour amplifier le signal d'actionnement (210) et au moins un actionneur (220) couplé à l'amplificateur de signal (218), dans lequel l'actionneur (220) est conçu pour effectuer l'actionnement en réponse à un signal d'actionnement (222) amplifié par l'amplificateur de signal (218), dans lequel le boîtier (114) comporte au moins un coussinet déformable élastiquement (300) sur une face inférieure (302) tournée vers un support pour le repose-poignet (108), dans lequel le coussinet (300) est couplé à l'au moins un actionneur (220), dans lequel l'actionneur (220) est conçu pour provoquer une vibration de l'au moins un coussinet (300) couplé à l'actionneur (220), dans lequel le boîtier (114) comporte au moins un crochet d'encliquetage (116) pour fixer le repose-poignet (108) à l'appareil de saisie (106).
